# EUROPEAN PATENT SPECIFICATION

(11) **EP 3 975 530 B1**
(45) Date of publication and mention of the grant of the patent: **19.06.2024**
(21) Application number: 20832321.2
(22) Date of filing: 22.06.2020
(51) Int. Cl.: H04M 1/02, G06F 1/16

(54) **FOLDABLE ELECTRONIC DEVICE**
FALTBARE ELEKTRONISCHE VORRICHTUNG
DISPOSITIF ÉLECTRONIQUE PLIABLE

(30) Priority: 24.06.2019 CN 201910550492
(43) Date of publication of application: 30.03.2022
(73) Proprietor: Huawei Technologies Co., Ltd., Longgang District Shenzhen, Guangdong 518129 (CN)
(72) Inventor: HAN, Lei, Shenzhen, Guangdong 518129 (CN); SHEN, Xu, Shenzhen, Guangdong 518129 (CN)
(74) Representative: Gill Jennings & Every LLP
(86) International application number: PCT/CN2020/097490
(87) International publication number: WO 2020/259443

(56) References cited:
- CN-U- 208 609 020
- US-A1- 2015 233 162

## Description

### TECHNICAL FIELD

This application relates to the field of electronic device technologies, and in particular, to a foldable electronic device.

### BACKGROUND

As people's requirements for electronic devices become higher, foldable electronic devices are gradually widely applied. A mobile phone is used as an example. A foldable mobile phone generally includes two bodies connected by using a hinge. After the mobile phone is folded, a volume of the mobile phone can be reduced, thereby achieving better portability. In addition, after being unfolded, the foldable mobile phone may provide a user with a larger display area, thereby improving visual experience and operation convenience of the user, and meeting requirements of the user in many aspects.

During actual application, an electrical connection usually needs to be implemented between the two bodies of the foldable mobile phone. In a conventional implementation, the electrical connection between the two bodies is generally implemented by using a flexible printed circuit (flexible printed circuit, FPC). When the foldable mobile phone is folded, the flexible printed circuit is correspondingly bent. However, in an actual case, a bending form and a bending location of the flexible printed circuit are uncontrollable. Therefore, the flexible printed circuit may be locally excessively bent, and an undesirable case such as wire breaking is prone to occur.
CN208609020 relates to a foldable electronic device allowing movement of the flexible screen.
US9250733 relates to a hinge device on which a flexible display panel is arranged in a foldable manner. CN109308847 relates to a foldable display apparatus.

### SUMMARY

The present invention is defined by the appended claims. Embodiments and aspects not falling within the scope fo the claims are considered useful for understanding the background of the invention. This application provides a foldable electronic device that may effectively control a bending form of a flexible printed circuit. As used herein the term "rotor" should be understood to mean a part that is able to rotate about a shaft i.e. a rotatable part.

The foldable electronic device provided in this application includes a first body, a second body, a flexible printed circuit, and a magnetic fastener. The first body and the second body are connected by using a hinge, so as to implement relative rotation and folding between the first body and the second body. A first end of the flexible printed circuit is electrically connected to the first body, and a second end of the flexible printed circuit is electrically connected to the second body, so as to implement an electrical connection between the first body and the second body across the hinge. The magnetic fastener is attracted and fastened to the hinge, and is configured to implement a fixed connection between the flexible printed circuit and the hinge. There is a fastening part between the first end and the second end of the flexible printed circuit, and the fastening part is clamped and fastened between the magnetic fastener and the hinge. The magnetic fastener has a surface that is configured to press against the fastening part, wherein the surface has at least one positioning column and the fastening part has a through-hole for the at least one positioning column to pass through. Further, the hinge has a positioning hole that is configured to plug-connect to the at least one positioning column.

In the foldable electronic device provided in this application, the fastening part of the flexible printed circuit is fixedly connected to the hinge, so that the flexible printed circuit does not shift to the first body or the second body when the foldable electronic device is folded and unfolded, thereby preventing a case in which the flexible printed circuit accumulates at the first body or the second body, which causes the flexible printed circuit to be locally excessively bent. In addition, friction between the flexible printed circuit and the hinge can be further prevented, and a case in which the flexible printed circuit is damaged by friction of the hinge is effectively avoided. According to another aspect, the flexible printed circuit located between the first end and the fastening part and the circuit board located between the second end and the fastening part may be separately bent and deformed as the foldable device is folded and unfolded, so that mutual interference is avoided, and a bending form of the flexible printed circuit is more controllable.

In some specific implementations, the flexible printed circuit may further include a first connection part and a second connection part, where the first connection part is located between the first end and the fastening part, and the second connection part is located between the second end and the fastening part; and the first connection part is fixedly connected to the first body, and the second connection part is fixedly connected to the second body.

During actual application, a length between the fastening part of the flexible printed circuit and the first end and a length between the fastening part of the flexible printed circuit and the second end may be relatively long. Controllability of the flexible printed circuit during bending and deformation can be improved in a manner of connecting the first connection part to the first body, and connecting the second connection part to the second body.

A length between the first connection part and the fastening part and a length between the second connection part and the fastening part may be varied. For example, in a specific implementation provided in this application, the first connection part and the second connection part are symmetrically disposed with respect to the fastening part, that is, a distance between the first connection part and the fastening part is the same as a distance between the second connection part and the fastening part. Certainly, in some specific implementations, the distance between the first connection part and the fastening part may be alternatively greater than or less than the distance between the second connection part and the fastening part.

In addition, in some specific implementations, to improve a friction force between the magnetic fastener and the flexible printed circuit, the magnetic fastener has at least one bump that may be disposed on the surface that is configured to press against the fastening part. When the surface of the magnetic fastener is bonded to the flexible printed circuit, the bump can increase a pressure and the friction force between the magnetic fastener and the flexible printed circuit, thereby improving relative stability between the flexible printed circuit and both of the magnetic fastener and the hinge.

According to the invention as defined in claim 1, the magnetic fastener has a surface that is configured to press against the fastening part; at least one positioning column is further disposed on the surface; further, the fastening part has a through-hole for the at least one positioning column to pass through; and correspondingly, the hinge has a positioning hole that is configured to plug-connect to the at least one positioning column.

When the magnetic fastener is attracted to the hinge, the positioning column can pass through the through-hole and be plug-connected to the positioning hole, thereby effectively improving relative stability between the flexible printed circuit and both of the magnetic fastener and the hinge.

The flexible printed circuit may be fixedly connected to hinges of a plurality of different structural types. For example, in a specific implementation provided in this application, the hinge includes a central shaft, a first rotor, and a second rotor, where the first rotor and the second rotor are rotatably connected by using the central shaft; and the first rotor is fixedly connected to the first body, the second rotor is fixedly connected to the second body, and the magnetic fastener is attracted and fastened to the central shaft.

In addition, to improve deformation controllability of the flexible printed circuit, in a specific implementation provided in this application, the flexible printed circuit has a deformation area and a holding area, where deformation resistance of the deformation area is lower than deformation resistance of the holding area.

In specific implementation, there may be a plurality of deformation areas and a plurality of holding areas. Optionally, the deformation areas and the holding areas may be alternately disposed in a direction from the first end to the second end of the flexible printed circuit.

In addition, the foldable electronic device may be specifically a notebook computer, a foldable mobile phone, an electronic book, or the like. Certainly, to provide a display function for a user, a display may be disposed on the first body and/or the second body. In specific implementation, the display is divided into two separate parts, and the two separate parts are respectively disposed on the first body and the second body. Certainly, the display may be alternatively an independent whole part, where one part of the whole part is disposed on the first body, and the other part of the whole part is disposed on the second body. In addition, in some specific implementations, the display may be alternatively disposed only on the first body or the second body.

### BRIEF DESCRIPTION OF DRAWINGS

FIG. 1 is a schematic diagram of an application scenario of a foldable electronic device;
FIG. 2 is a schematic diagram of a structure of a conventional foldable electronic device in a state;
FIG. 3 is a schematic diagram of a structure of a conventional foldable electronic device in another state;
FIG. 4 is a schematic diagram of a structure of another conventional foldable electronic device in a state;
FIG. 5 is a schematic diagram of a structure of another conventional foldable electronic device in another state;
FIG. 6 is a schematic diagram of a structure of a foldable electronic device according to an embodiment of this application;
FIG. 7 is a schematic diagram of a structure of another foldable electronic device according to an embodiment of this application;
FIG. 8 is a schematic diagram of a structure of a magnetic fastener according to an embodiment of this application;
FIG. 9 is a schematic diagram of a structure of another magnetic fastener according to an embodiment of this application;
FIG. 10 is a schematic diagram of an exploded structure of a foldable electronic device according to an embodiment of this application;
FIG. 11 is a schematic diagram of a structure of still another magnetic fastener according to an embodiment of this application;
FIG. 12 is a schematic diagram of a partial structure of a foldable electronic device according to an embodiment of this application;
FIG. 13 is a schematic diagram of a structure of a foldable electronic device according to an embodiment of this application;
FIG. 14 is a schematic diagram of a structure of another foldable electronic device according to an embodiment of this application;
FIG. 15 is a schematic diagram of an exploded structure of a foldable electronic device according to an embodiment of this application;
FIG. 16 is an enlarged view of a local part of FIG. 14;
FIG. 17 is a schematic diagram of an exploded structure of another foldable electronic device according to an embodiment of this application;
FIG. 18 is a schematic diagram of a structure of still another foldable electronic device according to an embodiment of this application;
FIG. 19 is a schematic diagram of a structure of a foldable electronic device according to an embodiment of this application;
FIG. 20 is a schematic diagram of a structure of a flexible printed circuit according to an embodiment of this application;
FIG. 21 is a schematic diagram of a structure of a hinge according to an embodiment of this application;
FIG. 22 is a schematic diagram of a structure of another hinge according to an embodiment of this application;
FIG. 23 is a schematic diagram of a structure of a foldable electronic device according to an embodiment of this application; and
FIG. 24 is a schematic diagram of a structure of another foldable electronic device according to an embodiment of this application.

### DESCRIPTION OF EMBODIMENTS

To make objectives, technical solutions, and advantages of this application more clearly, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. The term "and/or" is used to describe an association relationship between associated objects, and indicates that there may be three relationships. For example, A and/or B may represent the following cases: Only A exists, both A and B exist, and only B exists, where A and B may be singular or plural. The character "/" usually indicates an "or" relationship between the associated objects.

Reference to "one embodiment", or "some embodiments" described in this specification or the like means that one or more embodiments of this application include a particular feature, structure, or characteristic described with reference to the embodiment. Therefore, phrases "in one embodiment", "in some embodiments", "in some other embodiments", "in some additional embodiments", and the like that appear in different parts in this specification do not necessarily mean reference to a same embodiment, but mean "one or more embodiments, but not all embodiments", unless otherwise specifically emphasized in another manner. The terms "include", "comprise", "have", and variants thereof all mean "include but is not limited to", unless otherwise specifically emphasized in another manner.

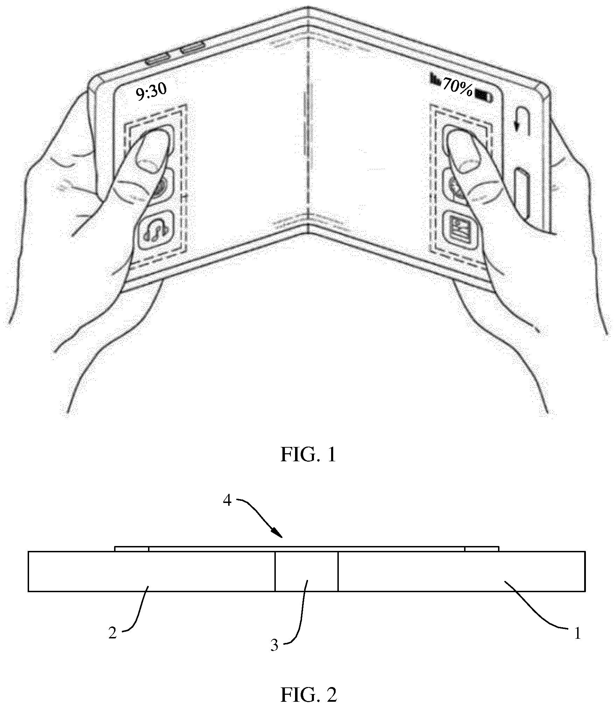

To facilitate understanding of a foldable electronic device provided in the embodiments of this application, the following first describes an application scenario of the foldable electronic device. As shown in FIG. 1, the foldable electronic device is specifically an electronic device that may change a form thereof in a manner such as folding or rotating. Under different use requirements, a user may fold and rotate the foldable electronic device to meet different requirements of the user. For example, when the user needs to carry the foldable electronic device, the user may fold the foldable electronic device by holding left and right parts of the foldable device with both hands, so as to reduce a volume of the foldable electronic device, thereby improving portability. When the user uses the foldable electronic device, the user may unfold the foldable device by holding the left and right parts of the foldable device with both hands, so as to provide a larger display area or a larger operating area, thereby improving convenience of use. During actual application, there may be a plurality of types of foldable electronic devices. For example, the foldable electronic devices may be specifically a notebook computer, a foldable mobile phone, an electronic book, and the like

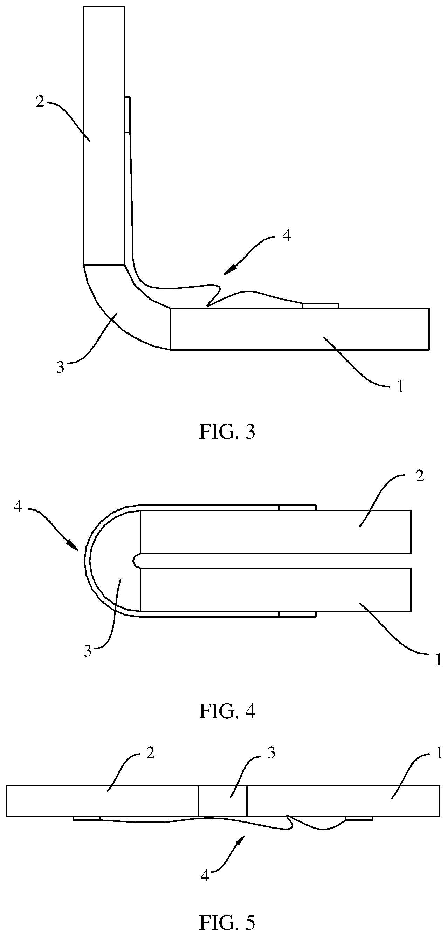

A foldable mobile phone is used as an example. Usually, the foldable mobile phone includes two bodies connected by using a hinge. Under action of the hinge, actions such as relative rotation and sliding can be performed between the two bodies. The two bodies need to be electrically connected, to implement transmission of electric energy or an electrical signal. Therefore, the two bodies may be connected by using a flexible printed circuit (flexible printed circuit, FPC). Because a bending radius of the flexible printed circuit is different from a rotation radius of the hinge, required lengths of the flexible printed circuit are different in different folded states. Specifically, in a specific implementation, as shown in FIG. 2, when the foldable mobile phone is in an unfolded state, a flexible printed circuit 4 is in a flat state. As shown in FIG. 3, when the foldable mobile phone tends to be folded, because a rotation radius of the flexible printed circuit 4 is less than a rotation radius of a hinge 3, the flexible printed circuit 4 generates an extra length, and the flexible printed circuit 4 is locally randomly bent and deformed or is shifted. Specifically, still referring to FIG. 3, the flexible printed circuit 4 as a whole is shifted toward a direction close to a first body 1, and a bent and deformed part is also concentrated in a part near the first body 1 at the same time. This is prone to cause the flexible printed circuit 4 to be locally excessively bent, or cause friction between the flexible printed circuit 4 and another component such as the hinge 3, resulting in an undesirable case in the flexible printed circuit 4, such as breakage, abrasion, or even a failure caused by wire breaking.

In addition, as shown in FIG. 4, in another specific implementation, when the foldable mobile phone is in a folded state, a flexible printed circuit 4 is in a smoothly bent state. As shown in FIG. 5, when the foldable mobile phone tends to be unfolded, because a rotation radius of the flexible printed circuit 4 is greater than a rotation radius of a hinge 3, the flexible printed circuit 4 generates an extra length, and the flexible printed circuit 4 is locally randomly bent and deformed or is shifted. Specifically, still referring to FIG. 5, the flexible printed circuit 4 as a whole is shifted toward a direction close to a first body 1, and a bent and deformed part is also concentrated in a part near the first body 1 at the same time. This is prone to cause the flexible printed circuit 4 to be locally excessively bent, or cause friction between the flexible printed circuit 4 and another component such as the hinge 3, resulting in an undesirable case in the flexible printed circuit 4, such as breakage, abrasion, or even a failure caused by wire breaking.

As described in the foregoing cases, to avoid the foregoing undesirable cases of the flexible printed circuit, in the foldable electronic device provided in the embodiments of this application, the flexible printed circuit is fixedly connected to a first body and a second body while being fixedly connected to the hinge.

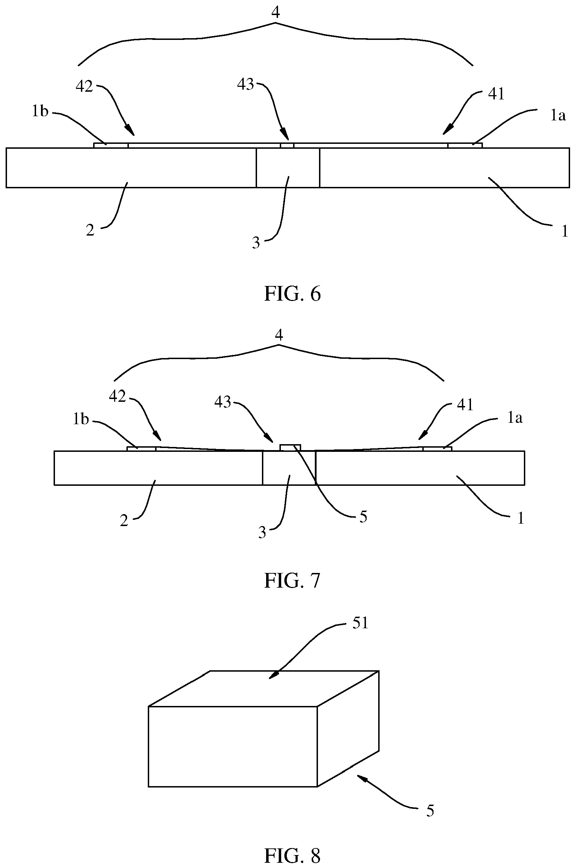

Specifically, as shown in FIG. 6, a flexible printed circuit 4 has a first end 41 and a second end 42, where the first end 41 is connected to a first body 1, and the second end 42 is connected to a second body 2; and there is a fastening part 43 between the first end 41 and the second end 42, and the fastening part 43 is fixedly connected to a hinge 3. The fastening part 43 is fixedly connected to the hinge 3, so that the flexible printed circuit 4 does not shift toward the first body 1 or the second body 2 when the foldable electronic device is folded and unfolded, thereby preventing a case in which the flexible printed circuit 4 accumulates at the first body 1 or the second body 2, which causes the flexible printed circuit 4 to be locally excessively bent. In addition, friction between the flexible printed circuit 4 and the hinge 3 can be further prevented, and a case in which the flexible printed circuit 4 is damaged by friction of the hinge 3 is effectively avoided. According to another aspect, the flexible printed circuit located between the first end 41 and the fastening part 43 and the flexible printed circuit located between the second end 42 and the fastening part 43 may be separately bent and deformed as the foldable device is folded and unfolded, so that mutual interference is avoided, and a bending form of the flexible printed circuit 4 is more controllable.

In specific implementation, the first end 41 of the flexible printed circuit 4 may be connected to the first body 1 by using a connector 1a, and the second end 42 of the flexible printed circuit 4 may be connected to the second body 2 by using a connector 1b. In addition, in some specific implementations, the flexible printed circuit 4 may be alternatively connected to the first body 1 and the second body 2 in a welding manner or the like.

To implement a fixed connection between the flexible printed circuit 4 and the hinge 3, as shown in FIG. 7, in an embodiment provided in this application, the flexible printed circuit 4 may be fixedly connected to the hinge 3 by using a magnetic fastener 5. That is, the fastening part 43 of the flexible printed circuit 4 is clamped and fastened between the magnetic fastener 5 and the hinge 3, so as to implement relative fastening among the flexible printed circuit 4, the magnetic fastener 5, and the hinge 3 by using a fraction force between the flexible printed circuit 4 and both of the magnetic fastener 5 and the hinge 3.

In some specific implementations, the magnetic fastener 5 may be specifically a magnet, and the hinge 3 may be made of a ferromagnetic material, or a related component or a part of a related component in the hinge 3 is made of a ferromagnetic material, so that the hinge 3 and the magnetic fastener 5 can be mutually attracted. In the manner in which the magnetic fastener 5 is attracted to the hinge 3, assembling difficulty of the foldable electronic device can be greatly reduced, and operability during assembling can be improved. Specifically, in some specific implementations, a structure (for example, a threaded hole) for connecting to the flexible printed circuit 4 may not be provided in the hinge 3, and a connection between the flexible printed circuit 4 and the hinge may be easily, quickly, and reliably implemented by using the magnetic fastener 5. The ferromagnetic material may include iron, nickel, cobalt, and the like. Certainly, specific structural forms of the magnetic fastener 5 and the hinge 3 may be varied.

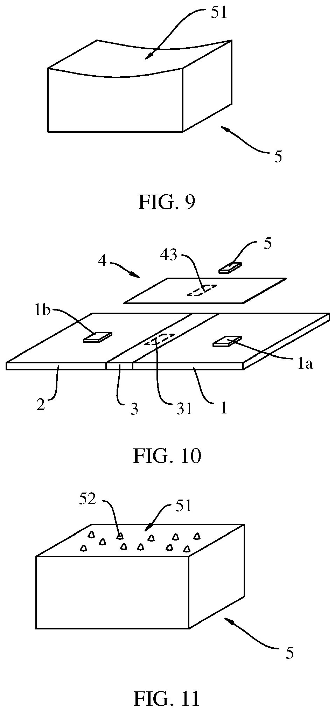

For example, as shown in FIG. 8, in an embodiment provided in this application, the magnetic fastener 5 is of a block-shaped structure, and has an attraction surface 51 that is configured to bond to the fastening part 43 of the flexible printed circuit 4 (attract to the hinge). In specific implementation, the attraction surface 51 may be of a planar structure shown in FIG. 7, or may be of a curved surface structure shown in FIG. 9.

For example, as shown in FIG. 10, in a specific implementation provided in this application, the attraction surface (which is not shown in the figure) is a plane. Correspondingly, to ensure attraction stability between the magnetic fastener 5 and the hinge 3, the hinge 3 has a flat fastening surface 31, and the fastening surface 31 is configured to bond to the fastening part 43 of the flexible printed circuit 4 (attract to the attraction surface of the magnetic fastener 5).

As shown in FIG. 11, in another specific implementation provided in this application, the attraction surface 51 may further have a bump structure 52. Setting of this structure may increase a pressure between the attraction surface 51 and the fastening part 43 of the flexible printed circuit 4, and a pressure between the hinge 3 and the flexible printed circuit 4, so as to increase a friction force between the flexible printed circuit 4 and both of the magnetic fastener 5 and the hinge 3, and improve relative stability among the flexible printed circuit 4, the magnetic fastener 5, and the hinge 3.

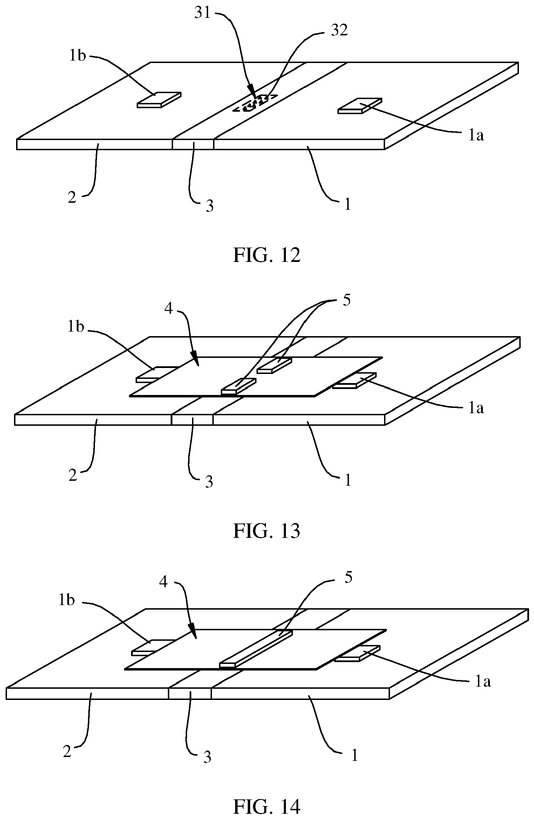

As shown in FIG. 12, in some specific implementations, a bump structure 32 may be alternatively disposed on the fastening surface 31. Certainly, in another embodiment, bump structures may be alternatively disposed on both the attraction surface 51 and the fastening surface 31, so as to increase the friction force between the flexible printed circuit 4 and both of the magnetic fastener 5 and the hinge 3.

Certainly, in some specific implementations, as shown in FIG. 13, there may be alternatively a plurality of magnetic fasteners 5 (in the figure, two magnetic fasteners 5 are used as an example) disposed along a width direction of the flexible printed circuit 3 at an interval, to increase the fraction force between the flexible printed circuit 4 and the hinge 3. In addition, the magnetic fastener 5 may be alternatively of a strip-shaped structure shown in FIG. 14, so as to increase a contact area between the magnetic fastener 5 and the flexible printed circuit 4, thereby improving relative stability among the flexible printed circuit 4, the magnetic fastener 5, and the hinge 3.

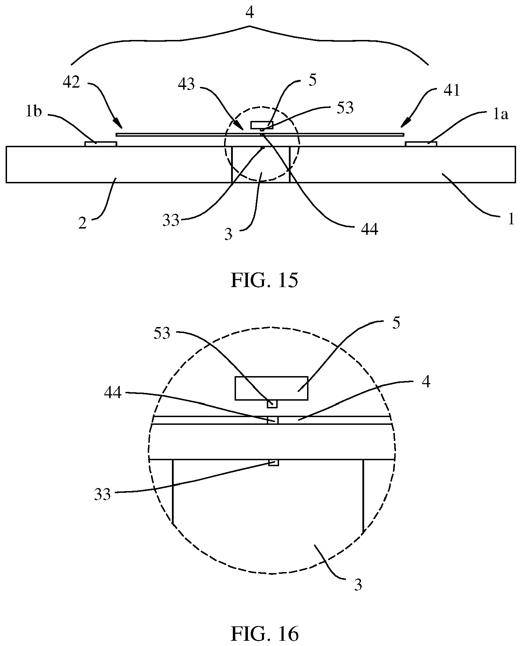

As shown in FIG. 15 and FIG. 16, according to the claimed invention, a positioning column 53 is disposed on the attraction surface 51, a mounting surface of the flexible printed circuit 4 has a positioning hole 33, and the fastening part 43 of the flexible printed circuit 4 has a through-hole 44 for the positioning column 53 to pass through. When the magnetic fastener 5 is attracted to the hinge 3, the positioning column 53 passes through the through-hole 44 and is plug-connected to the positioning hole 33. In this manner, connection stability among the magnetic fastener 5, the flexible printed circuit 4, and the hinge 3 can be effectively improved, so as to prevent relative sliding.

In specific implementation, a quantity and a location arrangement of positioning columns 53, a quantity and a location arrangement of through-holes 44, and a quantity and a location arrangement of positioning holes 33 may be varied. In addition, in some specific implementations, the positioning column 53 may be alternatively disposed on the hinge 3. Correspondingly, the positioning hole 33 may be provided on the magnetic fastener 5. Certainly, the positioning columns 53 may be alternatively disposed on both upper and lower sides of the flexible printed circuit 4, and positioning holes 33 plug-connected to the positioning columns 53 are separately provided on the magnetic fastener 5 and the hinge 3, so as to improve connection stability among the magnetic fastener 5, the flexible printed circuit 4, and the hinge 3.

In specific application, the fastening part 43 of the flexible printed circuit 4 may be relatively distant from the first end 41 and the second end 42 of the flexible printed circuit 4. To improve controllability of the flexible printed circuit 4 during bending and deformation, the controllability of the flexible printed circuit 4 during bending and deformation may be improved in a manner of separately connecting the flexible printed circuit 4 to the first body 1 and the second body 2.

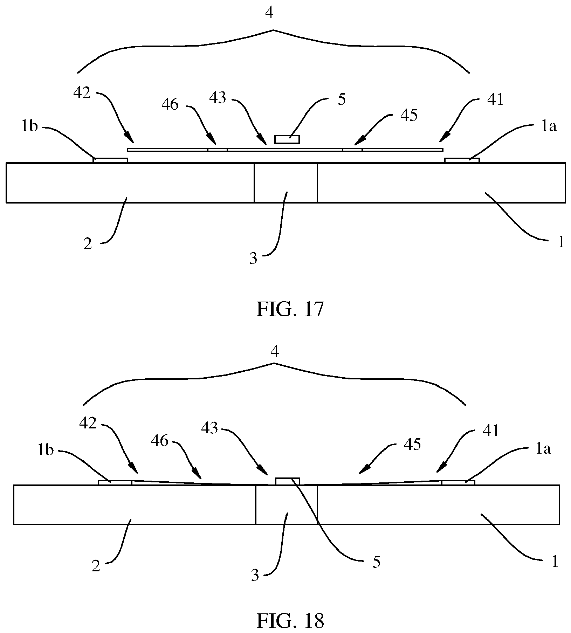

For example, as shown in FIG. 17, in an embodiment provided in this application, the flexible printed circuit 4 further includes a first connection part 45 and a second connection part 46, where the first connection part 45 is located between the first end 41 and the fastening part 43, and the second connection part 46 is located between the second end 42 and the fastening part 43. Specifically, the first connection part 45 is fixedly connected to the first body 1, and the second connection part 46 is fixedly connected to the second body 2. In this manner, a deformation area of the flexible printed circuit 4 can be effectively controlled between the fastening part 43 and the first connection part 45, and between the fastening part 43 and the second connection part 46.

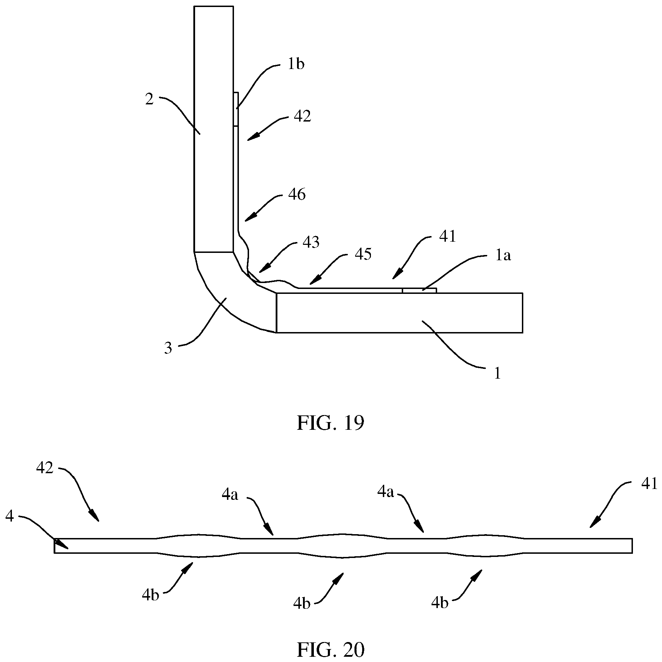

Further, as shown in FIG. 18, specifically, because both the first end 41 and the first connection part 45 are fixedly connected to the first body 1, a length between the first end 41 and the first connection part 45 does not change when the foldable electronic device is folded and unfolded. Correspondingly, a length between the second end 42 and the second connection part 46 does not change. As shown in FIG. 19, as the foldable electronic device is folded and unfolded, a length between the fastening part 43 and the first connection part 45 changes, so that this section of flexible printed circuit is bent and deformed. Correspondingly, a length between the fastening part 43 and the second connection part 46 also changes, so that this section of flexible printed circuit is bent and deformed. However, degrees of these kinds of bending and deformation may be much reduced compared with a degree of bending and deformation of the flexible printed circuit 4 in the conventional technology, thereby preventing the flexible printed circuit 4 from being locally excessively bent, which results in an undesirable case such as wire breaking.

In specific implementation, a relative relationship between a distance L1 between the fastening part 43 and the first connection part 45 and a distance L2 between the fastening part 43 and the second connection part 46 may be varied. For example, L1 > L2, L1 < L2, or L1 = L2. That is, the first connection part 45 and the second connection part 46 may be asymmetrically disposed with respect to the fastening part 43, or may be symmetrically disposed with respect to the fastening part 43.

In addition, a connection manner between the first connection part 45 and the first body 1 and a connection manner between the second connection part 46 and the second body 2 may be the same as a connection manner between the fastening part 43 and the hinge 3. Specifically, the first connection part 45 may be connected to the first body 1 by using the magnetic fastener 5, and the second connection part 46 may be connected to the second body by using the magnetic fastener 5.

In some specific implementations, the first connection part 45 may be alternatively connected to the first body 1 in a manner of bonding, welding, screw connection, or the like. Correspondingly, the second connection part 46 may also be connected to the second body 2 in a manner of bonding, welding, screw connection, or the like.

According to another aspect, in another implementation, a deformation area and a holding area may be alternatively disposed in the flexible printed circuit 4, so as to improve controllability of the flexible printed circuit 4 during bending and deformation. Specifically, as shown in FIG. 20, deformation resistance performance of a deformation area 4a is lower than deformation resistance performance of a holding area 4b. When the flexible printed circuit 4 is bent, because the deformation resistance performance of the deformation area 4a is lower than the deformation resistance performance of the holding area 4b, the deformation area 4a is bent and deformed, and the holding area 4b remains in a relatively flat state. In specific implementation, a thickness of the deformation area 4a may be less than a thickness of the holding area 4b. For example, thickening processing may be performed on a partial area of the flexible printed circuit to form the holding area 4b. In addition, a quantity and a location arrangement of deformation areas 4a and a quantity and a location arrangement of holding areas 4b may be varied.

For example, still referring to FIG. 20, in an embodiment provided in this application, deformation areas 4a and holding areas 4b are alternately disposed in a direction from the first end 41 to the second end 42 of the flexible printed circuit 4. Specifically, there are two deformation areas 4a and three holding areas 4b. The fastening part 43, the first connection part 45, and the second connection part 46 may be respectively located in the three holding areas 4b, and one deformation area 4a may be respectively disposed between the fastening part 43 and the first connection part 45 and between the fastening part 43 and the second connection part 46.

In the embodiments provided in this application, the fastening part 43 of the flexible printed circuit 4 is connected to the hinge 3, so that when the first body 1 and the second body 2 of the foldable electronic device are folded and flipped by using the hinge 3, parts on both sides of the fastening part 43 may be separately bent and deformed, so as to avoid mutual interference between the two parts, thereby improving controllability of the flexible printed circuit 4 during bending and deformation. In addition, the flexible printed circuit 4 is separately fixedly connected to the first body 1 and the second body 2 by using the first connection part 45 and the second connection part 46, so as to effectively control a bending and deformation area of the flexible printed circuit 4, and improve controllability of the flexible printed circuit 4 during bending and deformation. According to another aspect, the controllability of the flexible printed circuit 4 during bending and deformation can also be effectively improved by disposing the deformation area 4a and the holding area 4b in the flexible printed circuit 4.

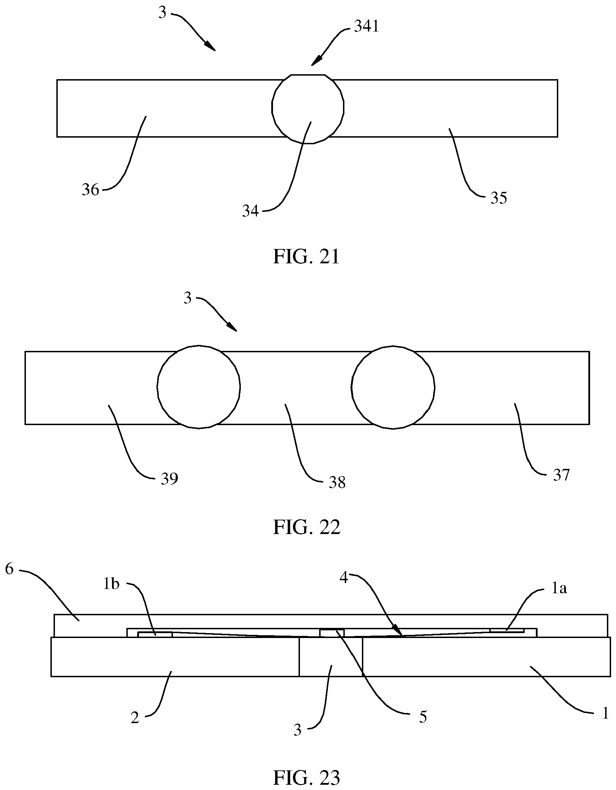

Certainly, the flexible printed circuit 4 can be applied to structures of a plurality of different types of hinges 3. For example, as shown in FIG. 21, in an embodiment provided in this application, the hinge 3 includes a central shaft 34, a first rotor 35, and a second rotor 36, where the first rotor 35 and the second rotor 36 are rotatably connected by using the central shaft 34, that is, the first rotor 35 and the second rotor 36 can perform relative rotation by using the central shaft 34 as a rotation axis. The first rotor 35 is connected to the first body, and the second rotor 36 is connected to the second body, so as to implement relative rotation and folding between the first body and the second body.

In specific implementation, the fastening part 43 of the flexible printed circuit 4 may be fixedly connected to the central shaft 34. Specifically, the central shaft 34 may be of a ferromagnetic material. The magnetic fastener 5 can be attracted to the central shaft 34, and the fastening part 43 of the flexible printed circuit 4 is clamped and fastened between the central shaft 34 and the magnetic fastener 5. Certainly, a planar structure 341 may be alternatively correspondingly disposed on a periphery of the central shaft 34 to increase a bonding area between the central shaft 34 and the magnetic fastener 5 (or the flexible printed circuit 4), so as to improve relative stability among the magnetic fastener 5, the flexible printed circuit 4, and the central shaft 34.

In addition, as shown in FIG. 22, in another embodiment provided in this application, the hinge 3 may further include a first rotor 37, a second rotor 38, and a third rotor 39. Specifically, the first rotor 37, the second rotor 38, and the third rotor 39 are successively hinged. The first rotor 37 is fixedly connected to the first body, and the third rotor 39 is fixedly connected to the second body, so as to implement relative rotation and folding between the first body and the second body.

In specific implementation, the fastening part 43 of the flexible printed circuit 4 may be fixedly connected to the second rotor 38. Specifically, the second rotor 38 may be made of a ferromagnetic material. The magnetic fastener 5 can be attracted to the second rotor 38, and the fastening part 43 of the flexible printed circuit 4 is clamped and fastened between the second rotor 38 and the magnetic fastener 5. Certainly, a planar structure may be alternatively correspondingly disposed on the second rotor 38 to increase a bonding area between the second rotor 38 and the magnetic fastener 5 (or the flexible printed circuit 4), so as to improve relative stability among the magnetic fastener 5, the flexible printed circuit 4, and the second rotor 38.

In addition, as shown in FIG. 23, in an embodiment provided in this application, the foldable electronic device further includes a flexible display 6 (OLED flexible display). A part of the flexible display 6 is fastened onto the first body 1, and the other part of the flexible display 6 is fastened onto the second body 2. When the first body 1 and the second body 3 are folded or rotated around the hinge 3, the flexible display near the hinge 3 may be bent and deformed. The first end 41 of the flexible printed circuit 4 may be connected to the flexible display 6 on the side of the first body 1 by using the connector 1a, and the second end 42 of the flexible printed circuit 4 may be connected to an electrical component on the second body 2. Specifically, the electrical component on the second body 2 may be a component such as a printed-circuit board (pcb circuit boards), a processor (central processing unit), or a battery. Certainly, the first end 41 of the flexible printed circuit 4 may be alternatively connected to an electrical component on one side of the first body 1, and the second end 42 of the flexible printed circuit 4 is connected to the flexible display on one side of the second body 2.

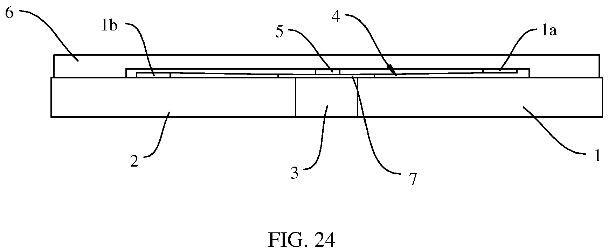

It should be understood that, as shown in FIG. 24, in another embodiment, a baffle mechanism 7 may be alternatively disposed between the flexible printed circuit 4 and the hinge 3, so as to prevent the flexible printed circuit 4 from being stuck in a slot of the hinge 3, resulting in damage to the flexible printed circuit 4.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable electronic device, comprising:
a first body (1) and a second body (2), wherein the first body and the second body are connected by using a hinge (3);
a flexible printed circuit (4), wherein a first end (41) of the flexible printed circuit is electrically connected to the first body, and a second end (42) of the flexible printed circuit is electrically connected to the second body; and
a magnetic fastener (5) fastened to the hinge; wherein
there is a fastening part (43) between the first end and the second end of the flexible printed circuit, and the fastening part is clamped and fastened between the magnetic fastener and the hinge;
wherein the magnetic fastener has a surface (51) that is configured to press against the fastening part, wherein the surface has at least one positioning column (53) and the fastening part (43) has a through-hole (44) for the at least one positioning column to pass through; and further
wherein the hinge has a positioning hole that is configured to plug-connect to the at least one positioning column.

2. The foldable electronic device according to claim 1, wherein the flexible printed circuit further comprises a first connection part (45) and a second connection part (46);
the first connection part is located between the first end and the fastening part, and the second connection part is located between the second end and the fastening part; and
the first connection part is fixedly connected to the first body, and the second connection part is fixedly connected to the second body.

3. The foldable electronic device according to claim 2, wherein the first connection part and the second connection part are symmetrically disposed with respect to the fastening part.

4. The foldable electronic device according to any one of claims 1 to 3, wherein the surface that is configured to press against the fastening part has at least one bump.

5. The foldable electronic device according to any one of claims 1 to 4, wherein the hinge comprises a central shaft (34), a first rotor (35), and a second rotor (36);
the first rotor and the second rotor are rotatably connected by using the central shaft; and
the first rotor is fixedly connected to the first body, the second rotor is fixedly connected to the second body, and
the magnetic fastener is fastened to the central shaft.

6. The foldable electronic device according to any one of claims 1 to 5,
wherein the flexible printed circuit has a deformation area (4a) and a holding area (4b); and
deformation resistance of the deformation area is lower than deformation resistance of the holding area.

7. The foldable electronic device according to claim 6, wherein there are a plurality of deformation areas and a plurality of holding areas; and
the deformation areas and the holding areas are alternately disposed in a direction from the first end to the second end of the flexible printed circuit.

8. The foldable electronic device according to any one of claims 1 to 7, wherein the first body and/or the second body comprises a display.

## Patentansprüche

1. Faltbare elektronische Vorrichtung, die Folgendes umfasst:
einen ersten Körper (1) und einen zweiten Körper (2), wobei der erste Körper und der zweite Körper mittels eines Gelenks (3) verbunden sind;
eine flexible Leiterplatte (4), wobei ein erstes Ende (41) der flexiblen Leiterplatte elektrisch mit dem ersten Körper verbunden ist und ein zweites Ende (42) der flexiblen Leiterplatte elektrisch mit dem zweiten Körper verbunden ist; und
ein magnetisches Befestigungselement (5), das an dem Gelenk befestigt ist; wobei ein Befestigungsteil (43) zwischen dem ersten Ende und dem zweiten Ende der flexiblen Leiterplatte vorhanden ist und das Befestigungsteil zwischen dem magnetischen Befestigungselement und dem Gelenk geklemmt und befestigt ist;
wobei das magnetische Befestigungselement eine Oberfläche (51) aufweist, die dazu ausgelegt ist, gegen den Befestigungsteil zu drücken, wobei die Oberfläche mindestens eine Positionierungssäule (53) aufweist und der Befestigungsteil (43) ein Durchgangsloch (44) zur Durchführung der mindestens einen Positionierungssäule aufweist; und ferner
wobei das Gelenk ein Positionierungsloch aufweist, das zur Steckverbindung mit der mindestens einen Positionierungssäule ausgelegt ist.

2. Faltbare elektronische Vorrichtung nach Anspruch 1, wobei die flexible Leiterplatte ferner einen ersten Verbindungsteil (45) und einen zweiten Verbindungsteil (46) aufweist;
der erste Verbindungsteil zwischen dem ersten Ende und dem Befestigungsteil liegt und der zweite Verbindungsteil zwischen dem zweiten Ende und dem Befestigungsteil liegt; und
der erste Verbindungsteil fest mit dem ersten Körper verbunden ist und der zweite Verbindungsteil fest mit dem zweiten Körper verbunden ist.

3. Faltbare elektronische Vorrichtung nach Anspruch 2, wobei der erste Verbindungsteil und der zweite Verbindungsteil symmetrisch bezüglich des Befestigungsteils angeordnet sind.

4. Faltbare elektronische Vorrichtung nach einem der Ansprüche 1 bis 3, wobei die Oberfläche, die dazu ausgelegt ist, gegen den Befestigungsteil zu drücken, mindestens einen Höcker aufweist.

5. Faltbare elektronische Vorrichtung nach einem der Ansprüche 1 bis 4, wobei das Gelenk eine mittlere Welle (34), einen ersten Rotor (35) und einen zweiten Rotor (36) umfasst;
der erste Rotor der zweite Rotor mittels der mittleren Welle drehbar verbunden sind; und
der erste Rotor fest mit dem ersten Körper verbunden ist, der zweite Rotor fest mit dem zweiten Körper verbunden ist und das magnetische Befestigungselement an der mittleren Welle befestigt ist.

6. Faltbare elektronische Vorrichtung nach einem der Ansprüche 1 bis 5, wobei die flexible Leiterplatte einen Verformungsbereich (4a) und einen Haltebereich (4b) aufweist; und
ein Verformungswiderstand des Verformungsbereichs geringer als ein Verformungswiderstand des Haltebereichs ist.

7. Faltbare elektronische Vorrichtung nach Anspruch 6, wobei mehrere Verformungsbereiche und mehrere Haltebereiche vorhanden sind; und
die Verformungsbereiche und die Haltebereiche abwechselnd in einer Richtung vom ersten Ende zum zweiten Ende der flexiblen Leiterplatte angeordnet sind.

8. Faltbare elektronische Vorrichtung nach einem der Ansprüche 1 bis 7, wobei der erste Körper und/oder der zweite Körper eine Anzeige umfasst bzw. umfassen.

## Revendications

1. Dispositif électronique pliable, comportant :
un premier corps (1) et un second corps (2), le premier corps et le second corps étant reliés à l'aide d'une charnière (3) ;
un circuit imprimé souple (4), une première extrémité (41) du circuit imprimé souple étant reliée électriquement au premier corps, et une seconde extrémité (42) du circuit imprimé souple étant reliée électriquement au second corps ; et
un élément (5) de fixation magnétique fixé à la charnière ;
une partie (43) de fixation se trouvant entre la première extrémité et la seconde extrémité du circuit imprimé souple, et la partie de fixation étant serrée et immobilisée entre l'élément de fixation magnétique et la charnière ;
l'élément de fixation magnétique présentant une surface (51) qui est configurée pour appuyer contre la partie de fixation, la surface possédant au moins une colonne (53) de positionnement et la partie (43) de fixation présentant un trou débouchant (44) destiné à être traversé par la ou les colonnes de positionnement ; et en outre la charnière présentant un trou de positionnement qui est configuré pour se connecter par enfichage à la ou aux colonnes de positionnement.

2. Dispositif électronique pliable selon la revendication 1, le circuit imprimé souple comportant en outre une première partie (45) de liaison et une seconde partie (46) de liaison ;
la première partie de liaison étant située entre la première extrémité et la partie de fixation, et la seconde partie de liaison étant située entre la seconde extrémité et la partie de fixation ; et
la première partie de liaison étant en liaison complète avec le premier corps, et la seconde partie de liaison étant en liaison complète avec le second corps.

3. Dispositif électronique pliable selon la revendication 2, la première partie de liaison et la seconde partie de liaison étant disposées symétriquement par rapport à la partie de fixation.

4. Dispositif électronique pliable selon l'une quelconque des revendications 1 à 3, la surface qui est configurée pour appuyer contre la partie de fixation présentant au moins une bosse.

5. Dispositif électronique pliable selon l'une quelconque des revendications 1 à 4, la charnière comportant un arbre central (34), un premier rotor (35) et un second rotor (36) ;
le premier rotor et le second rotor étant en liaison pivot à l'aide de l'arbre central ; et
le premier rotor étant en liaison complète avec le premier corps, le second rotor étant en liaison complète avec le second corps, et l'élément de fixation magnétique étant fixé à l'arbre central.

6. Dispositif électronique pliable selon l'une quelconque des revendications 1 à 5, le circuit imprimé souple possédant une zone (4a) de déformation et une zone (4b) de maintien ; et
une résistance à la déformation de la zone de déformation étant inférieure à une résistance à la déformation de la zone de maintien.

7. Dispositif électronique pliable selon la revendication 6, une pluralité de zones de déformation et une pluralité de zones de maintien étant présentes ; et
les zones de déformation et les zones de maintien étant disposées de manière alternée dans une direction allant de la première extrémité à la seconde extrémité du circuit imprimé souple.

8. Dispositif électronique pliable selon l'une quelconque des revendications 1 à 7, le premier corps et/ou le second corps comportant un affichage.
